# EUROPEAN PATENT APPLICATION

(11) **EP 0 851 633 A2**
(43) Date of publication of application: **01.07.1998**
(21) Application number: 97310182.7
(22) Date of filing: 16.12.1997
(51) Int. Cl.: H04L 12/28, H04Q 7/38

(54) **System and method for achieving handover in wireless LAN by buffering data at subsequent access point**

(30) Priority: 30.12.1996 US 775115
(71) Applicant: LUCENT TECHNOLOGIES INC., Murray Hill, New Jersey 07974-0636 (US)
(72) Inventor: Moelard, Hendrik, 3607 GT Maarssen (NL); Monteban, Leo, 3437 VB Nieuwegein (NL)
(74) Representative: Funnell, Samantha Jane

(57) **Abstract**

A system, associated with a first access point of a wireless local area network ("LAN"), for achieving handover of a mobile station from the first access point to a second access point of the wireless LAN, a method of operating the first access point to achieve handover and a wireless computer network. The system includes: (1) a wireless transceiver circuit that receives a handover imminent message from the mobile station indicating that the mobile station is about to dissociate from the first access point and associate with the second access point and (2) a network interface that transmits a handover preparation message, including an identifier relating to the mobile station, to the second access point via the LAN that causes the second access point to initiate a process under which the second access point begins to receive and buffer messages destined for the mobile station, the mobile station subsequently dissociating from the first access point and associating with the second access point to achieve the handover.

## Description

### TECHNICAL FIELD OF THE INVENTION

The present invention is directed, in general, to a wireless computer network and, more specifically, to a system and method for achieving handover in a wireless local area network ("LAN") by buffering. data at a subsequent access point thereto.

### BACKGROUND OF THE INVENTION

Computer systems configured as LANS have been common for nearly two decades and are popular in a wide variety of business and educational applications. The most common LANs comprise a number of processing devices and a server that are coupled together by a hard-wired connection. Since about 1990, however, wireless LANs have become more common in the marketplace. Although the concept behind wireless LANS had been described a decade earlier, interest in LAN networks was limited until the release of the 2.4 GHz unlicensed band for industrial, scientific and medical ("ISM") applications. Wireless LAN products most often employ either direct sequence spread spectrum ("DSSS") or frequency-hopping spread spectrum ("FHSS") techniques to communicate between roaming mobile stations and network access points.

In a typical wireless computer network environment, the "backbone" of the LAN takes the form of one or more central servers that communicate with a number of network base stations, or access points ("APs"), through a hard-wired connection. In some configurations, the LAN backbone may actually comprise several LAN segments interconnected by transparent bridges. Each base station, or access point (AP), includes a transceiver for communicating with at least one roaming mobile station ("MS"). The mobile station may be a point-of-sale terminal (*e*.*g*., an electronic cash register), a bar code reader or other scanning device, or a notepad, desktop or laptop computer. Each MS establishes a communication link with an AP by scanning the ISM band to find an available AP. Once a reliable link is established, the MS interacts with other mobile stations, a server or both. This allows the user of the MS to move freely in the office, factory, hospital or other facility where the wireless LAN is based, without the length of a hard-wired connection to the LAN limiting the MS.

Eventually, however, the MS will move out of the range, or coverage area, of its current AP, usually into the coverage area of a second AP. When the MS senses that the communication link with the current AP is unacceptably weak, the MS initiates a "handover" that breakdowns the communication link with the current AP and establishes a new communication link with the second AP. In order to execute a handover, the MS instructs the current AP to buffer messages while the MS scans for a new AP. When a new AP is found, the MS sends a command to the current AP to send the buffered messages to the new AP through the LAN backbone. The MS then configures its transceiver to the frequency of the new AP, requests that any messages buffered by either AP be delivered to it, and transmits any outgoing messages buffered by the MS to the new AP.

A common problem in such wireless LAN systems is the "cleanup" involved after the handover has been performed. It is inherently difficult to guarantee that the buffered messages that are transmitted from the old AP to the new AP via the backbone network will be delivered in the same sequence in which the buffered messages were received by the old AP.

Accordingly, what is needed in the art is a system and method for ensuring in-sequence delivery of network messages to a roaming MS that has just completed a handover from a first AP to a second AP.

### SUMMARY OF THE INVENTION

To address the above-discussed deficiencies of the prior art, the present invention provides a system, associated with a first access point of a wireless LAN, for achieving handover of a mobile station from the first access point to a second access point of the wireless LAN. The present invention also provides a method of operating the first access point to achieve handover and a wireless computer network. The system includes: (1) a wireless transceiver circuit that receives a handover imminent message from the mobile station indicating that the mobile station is about to dissociate from the first access point and associate with the second access point and (2) a network interface that transmits a handover preparation message, including an identifier relating to the mobile station, across the backbone of the LAN that causes the second access point to begin to receive and buffer messages destined for the mobile station, the mobile station subsequently dissociating from the first access point and associating with the second access point to achieve the handover.

The present invention therefore introduces the broad concept of buffering the messages destined for the mobile station in the second access point (temporally speaking, the "subsequent access point"), rather than in the first access point (also temporally speaking, the "current access point"). Because the messages are so buffered in the second access point, they are properly ordered so that the mobile station is not required to buffer and reorder messages to the extent required in the prior art. The present invention therefore allows smoother handover as roamable (literally, "able to roam") mobile stations handover from access point to access point as a function of their ever-changing location.

In a preferred embodiment of the present invention, the transceiver transmits buffered messages to the mobile station following transmission of the handover preparation message. In an embodiment to be illustrated and described, the first access point continues to receive messages from the LAN that are destined for the mobile station until it receives an acknowledgment from the second access point that the second access point has begun to receive and buffer messages. In this embodiment, the first access point is given an opportunity to empty its buffer to the mobile station before the mobile station dissociates from it.

In a preferred embodiment of the present invention, the second access point initiates the process by transmitting a "handover prepared" message to the first access point via the LAN, the handover prepared message causing the LAN to redirect messages destined for the mobile station from the first access point to the second access point. The handover prepared message ideally accomplishes two objectives. First, as the handover prepared message is routed through the LAN, it causes nodes therein (such as bridges, routers, repeaters and the like) to update their respective bridge filter tables to redirect messages to the second access point. This may be accomplished by using the MAC address of the mobile station as the source address in the handover prepared message, which causes an automatic update of the bridge filter tables. Second, the handover prepared message serves as an acknowledgment to the first access point that the second access point has already begun receiving and buffering messages destined for the mobile station. This frees the first mobile station to dissociate the mobile station therefrom.

In a preferred embodiment of the present invention, the LAN comprises at least one bridge containing a bridge filter table, the second access point initiating the process by causing the bridge to update an entry in the bridge filter table corresponding to the identifier. As those skilled in the art understand, bridges and other LAN nodes are conventionally capable of automatically updating their associated bridge filter tables by virtue of an embedded learning function. The present invention can make use of this existing function by causing the second access point to transmit an appropriate message through the LAN.

In a preferred embodiment of the present invention, the transceiver circuit receives messages from the mobile station destined for the LAN after the network interface transmits the handover preparation message. In this embodiment, the mobile station does not dissociate from the first access point until the second access point has begun receiving and buffering messages destined for the mobile station. Accordingly, until dissociation occurs, the first access point continues to receive messages from, and transmit messages to, the mobile station.

In a preferred embodiment of the present invention, the transceiver transmits a dissociate message to the mobile station to cause the mobile station to dissociate from the first access point. The dissociate message triggers the mobile station to switch frequencies to that of the second access point, thereby causing the mobile station to reassociate and achieve handover.

In a preferred embodiment of the present invention, the second access point transmits the received and buffered messages to the mobile station after the mobile station associates with the second access point. This allows the mobile station to "catch up" on messages that accrued in the second mobile station while handover was occurring. Because the mobile station preferably receives messages buffered in the second access point after it does messages buffered in the first access point, the order in which the mobile station receives the messages more closely approximates the original order of their transmission. This can significantly reduce the amount of message buffering and reordering that the mobile station would otherwise be required to undertake to reconstruct the proper message order.

The foregoing has outlined, rather broadly, preferred and alternative features of the present invention so that those skilled in the art may better understand the detailed description of the invention that follows. Additional features of the invention will be described hereinafter that form the subject of the claims of the invention. Those skilled in the art should appreciate that they can readily use the disclosed conception and specific embodiment as a basis for designing or modifying other structures for carrying out the same purposes of the present invention. Those skilled in the art should also realize that such equivalent constructions do not depart from the spirit and scope of the invention in its broadest form.

### BRIEF DESCRIPTION OF THE DRAWINGS

For a more complete understanding of the present invention, reference is now made to the following descriptions taken in conjunction with the accompanying drawings, in which:
FIGURE 1 illustrates a topological diagram of a wireless computer network in accordance with one embodiment of the present invention; and
FIGURE 2 illustrates a message protocol exchange diagram in accordance with IEEE Standard 802.1 for performing a handover from a first access point to a second access point in accordance with the present invention.

### DETAILED DESCRIPTION

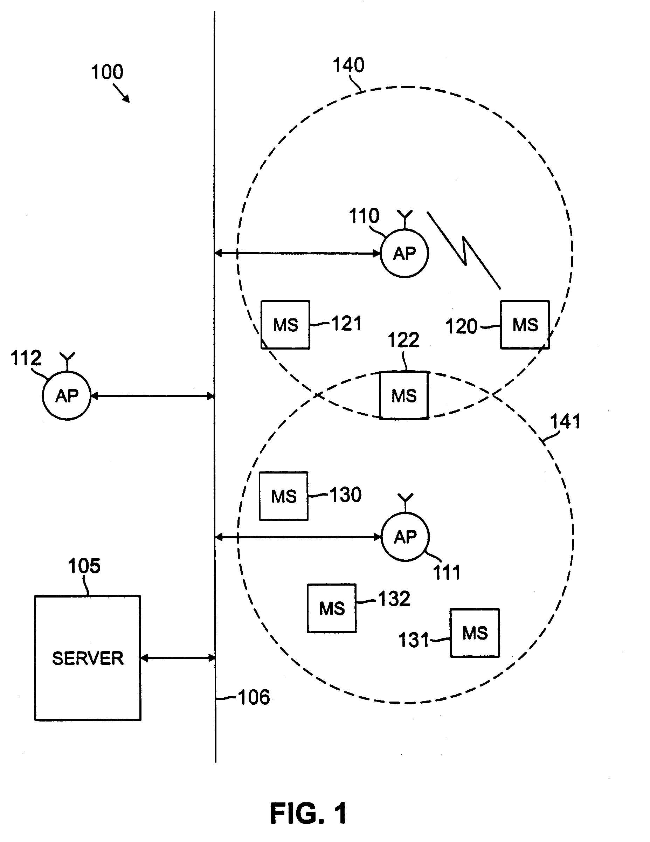

Referring initially to FIGURE 1, illustrated is a topological diagram of a wireless computer network 100 in accordance with one embodiment of the present invention. Server 105 of wireless network 100 communicates bi-directionally with access points 110-112 via bus 106, which is typically a hard-wired connection. In other embodiments, server 105 may communicate with one or more of access points 110-112 by wireless link. AP 110-112 also communicate with one or more mobile stations (MS) 120-122 and 130-132 by wireless link. Each access point can transmit data to and receive data from mobile stations that are within the specified broadcast range of the access point. For example, AP 110 and AP 111 have broadcast ranges 140 and 141, respectively. AP 110 can communicate with MS 120, MS 121 and MS 122 and AP 111 can communicate with MS 130, MS 131, MS 132 and MS 122.

Although the exemplary broadcast coverage areas of AP 110 and AP 111 are circular in shape, it is possible for the broadcast area of an access point to assume other shapes, including hexagonal. The shape and size of the coverage area of an access point is frequently determined by obstructions that prevent the transmission of signals between the access point and a mobile station.

In an exemplary embodiment, network 100 may be a wireless LAN in an office building. Mobile stations 120-122 and 130-132 are typically desktop and/or notebook computers that communicate with a document server, such as server 105, or run payroll or spreadsheet applications in connection with a server. Alternatively, network 100 may be a wireless LAN used to run the operations of a warehouse facility or manufacturing plant. Employees roaming the warehouse or factory floor, or even moving outside the facility, could communicate with a central server using a wide variety of mobile stations. For example, employees could use bar code scanners to send and receive data to/from server 105 through AP 110-112. Other employees may roam a facility using notepad devices to update inventory in server 105. In still other embodiments, network 100 may be a wireless LAN in a large department store and mobile stations 120-122 and 130-132 may be electronic cash registers and/or bar code readers.

In larger systems, the backbone of wireless computer network 100 may be comprised of two or more LAN segments joined by transparent bridges, or Medium Access Control (MAC) level bridges, in accordance with IEEE Standard 802.1(d) and (e). The transparent bridges and access points in a wireless computer network maintain dynamic filter tables that identify the mobile stations in the network and the specific access point that interfaces with each mobile station. In accordance with an embedded learning function, the source address of each message received at an interface of the bridge or access point is used to update the dynamic filtering database of each access point or bridge that receives and forwards each message to its ultimate destination.

As mobile stations 120-122 and 130-132 move about in the wireless LAN environment, the mobile stations will enter and leave the coverage areas of different access points. For example, as MS 122 moves from AP 110 towards AP 111, MS 122 will move out of the coverage range of its current access point, AP 110, and into the coverage range of a new access point, AP 111. At some point in its movement, MS 122 determines that the signal quality of the link with current AP 110 has degraded below (or at least close to) an acceptable threshold level. When this occurs, MS 110 begins scanning for another AP in order to set up a "handover".

Systems and methods of performing a handover from a first base station (or access point) to a second base station are disclosed in U.S. Patent No. 5,371,738 to *Moelard et al.* The teachings disclosed in U.S. Patent No. 5,371,738 are hereby incorporated by reference in the present disclosure as if fully set forth herein. The handover causes the communication link with a current access point to be broken down and a new link to be established with a future access point. Ideally, the handover appears seamless to the user of the roaming mobile station.

The present invention avoids the previously mentioned problems in the prior art associated with ensuring "in-sequence" delivery of messages after a handover by shifting the message buffering function from the old (current) AP to the new AP prior to the handover procedure. To accomplish this, the routing functions of MAC-level bridges in the LAN backbone are updated to indicate that messages destined for the mobile station are to be routed to the future access point before the roaming mobile station actually initiates handover to the new access point. The future access point will start receiving and buffering messages for the roaming mobile station before the mobile station does a re-association with the future access point.

In a preferred embodiment, the present invention accomplishes this by sending a HANDOVER PREPARED message across the intermediate bridges of the LAN. This HANDOVER PREPARED message is transmitted from the future access point to the current access point, but uses the MAC address of the mobile station as the source of the HANDOVER PREPARED message (rather than the source address of the access point). This tricks the intermediate bridges into automatically updating their filter tables to reflect that the mobile station is associated with the new (future) access point. In fact, the mobile station is still associated with the old (current) access point.

The present invention implements the improved handover procedure according to the method outlined below. For the purpose of simplicity, it will be assumed that roaming mobile station MS 122 is moving away from its current access point, AP 110, and is about to initiate a scanning process to find another (future) access point with a stronger signal and a relatively low workload. The future access point will be AP 111. The method is as follows:
1) MS 122 determines that the communication link with AP 110 is unacceptably weak.
2) MS 122 signals AP 110 to begin buffering messages destined for MS 122 and MS 122 initiates its own outbound buffering function to buffer outbound messages to be sent to AP 110.
3) MS 122 scans for a better access point and establishes a strong signal with AP 111.
4) MS 122 configures it transceiver back to the frequency channel of AP 110.
5) MS 122 may optionally send all messages from the outbound buffering function to AP 110 and then restart the outbound buffering function. Otherwise, MS 122 may keep the outbound buffering function active until after the handover is complete and release the buffered messages to AP 111.
6) MS 122 transmits a HANDOVER IMMINENT message to AP 110. This message includes the address information of AP 111.
7) AP 110 transmits a HANDOVER PREPARATION message to AP 111 via the backbone network. This message includes the address information of MS 122. AP 110 also releases to MS 122 all messages buffered while MS 122 scanned for a new AP.
8) When AP 111 receives the HANDOVER PREPARATION message, AP 111 initializes a handover buffering function for all messages destined for MS 122.
9) AP 111 sends a HANDOVER PREPARED message to AP 110. This messages uses the MAC address of MS 122 as source address. Therefore, as the message traverses the backbone network, all MAC level bridges between AP 110 and AP 111 use the embedded learning function to modify their bridge filter table entries to reflect the new address of MS 122. The net effect is that new messages destined for MS 122 are sent to AP 111, rather than AP 110.
10) When AP 110 receives the HANDOVER PREPARED message, AP 110 knows that no further messages for MS 122 can be expected. AP 110 transmits all remaining buffered messages to MS 122 and, at the end, sends a standard DISASSOCIATE message to MS 122.
11) When MS 122 receives the DISASSOCIATE message, MS 122 reconfigures its transceiver for the frequency of AP 111 and sends a standard (RE)ASSOCIATE message to AP 111.
12) AP 111 will immediately accept the (RE)ASSOCIATE message and release the handover buffering function used to store incoming messages destined for MS 122 that were received during the handover. MS 122 and AP 111 thereafter resume normal communications.

At this point, MS 122 has successfully switched from its old access point, AP 110, to a new access point, AP 111.

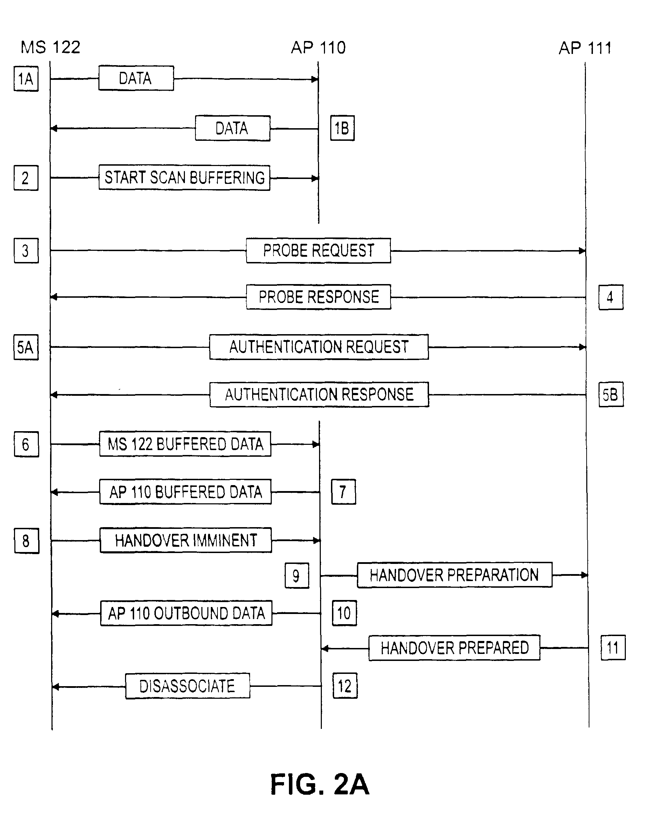

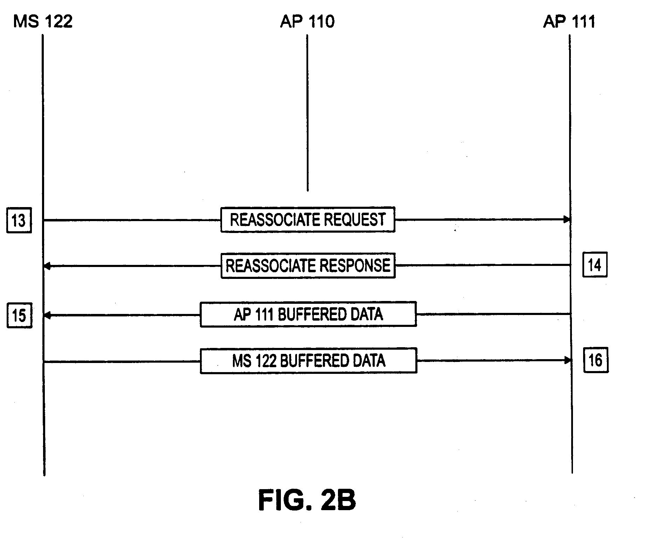

FIGURE 2 illustrates a message protocol exchange diagram in accordance with IEEE Standard 802.1 for performing a handover from a first access point to a second access point in accordance with the method outlined above. In FIGURE 2, the message numbers within boxes indicate the sequence of data messages and the point at which each message originates (i.e., MS 122, AP 110, AP 111).

Messages 1A and 1B represent ongoing data transfers between MS 122 and AP 110. MS 122 continually monitors the quality of the communication link with AP 110. When the link quality degrades below a predetermined threshold, MS 122 enters a scanning process to find a better access point. MS 122 initiates the scanning process by instructing AP 110 to buffer messages during the scanning process via a START SCAN BUFFERING message (Message 2). At the same time, MS 122 begins buffering its own outbound messages.

Next, MS 122 transmits a PROBE REQUEST (Message 3), to measure-the link quality of other access points, including access points operating in another frequency channel. AP 111 (and possibly other access points) responds by transmitting a PROBE RESPONSE (Message 4) back to MS 122. MS 122 determines that the link quality with AP 111 is the best available and further determines that a handover will be performed from AP 110 to AP 111. To verify that AP 111 will accept the handover later, MS 122 sends an AUTHENTICATION REQUEST to AP 111 (Message 5A). AP 111 responds by sending an AUTHENTICATION RESPONSE (Message 5B) to indicate that it will accept MS 122 after the handover.

Prior to performing the handover, MS 122 retrieves any buffered messages from AP 110. To do this, MS 122 sets its transceiver back to the frequency of AP 110 and transmits any outbound buffered messages to AP 110 (Message 6). This step is optional, MS 122 may instead continue to buffer the messages and transmit them to AP 111 after the handover. When AP 110 receives a data message from MS 122, AP 110 determines that MS 122 has returned from scanning and transmits the messages that AP 110 had stored in the scan buffer to MS 122 (Message 7).

At some point prior to handover, MS 122 reactivates its outbound buffering function and sends a HANDOVER IMMINENT to AP 110 (Message 8), which includes the address of AP 111. In the meantime, AP 110 continues to send buffered messages to MS 122 (Message 10), as well as any newly arrived messages destined for MS 122. After receiving the HANDOVER IMMINENT message, AP 110 sends a HANDOVER PREPARATION to AP 111 (Message 9), which causes AP 111 to start a handover buffering function. AP 111 responds by sending a HANDOVER PREPARED message to AP 110 (Message 11), which includes the MAC level address of MS 122 as the source address. As discussed above, all LAN bridges will be tricked into believing that MS 122 is already communicating through AP 111. At this point, all future messages destined for MS 122 will be sent to AP 111.

When all scan buffered messages and any messages that arrived afterward are finally transferred from AP 110 to MS 122 (Message 10), AP 111 transmits a standard DISASSOCIATE message to MS 122 (Message 12). In response, MS 122 reconfigures its transmitter back to the frequency channel of AP 111 and transmits a (RE)ASSOCIATE REQUEST to AP 111 (Message 13). AP 111, which buffered messages in anticipation of a handover, sends a (RE)ASSOCIATE RESPONSE (Message 14). When the new communication link is established, AP 111 and MS 122 release data buffered during the handover (Messages 15 and 16).

There are other ways of causing a wireless network to buffer messages intended for a mobile station at the future access point during handover. The above-described method and apparatus uses the HANDOVER PREPARED message from AP 111 to AP 110 to update the bridge filter tables. In an alternate embodiment, the embedded learning function of the bridges and access points may be modified to look at the destination, as well as the source, of a message in order to trigger an update of the contents of the filter tables.

For example, AP 110 could transmit the HANDOVER PREPARATION message to AP 111 using the address of MS 122 as the ultimate destination of the message. AP 111, having been alerted already by the AUTHENTICATION REQUEST/AUTHENTICATION RESPONSE exchange about the imminent handover of MS 122, accepts the HANDOVER PREPARATION message (even though it is not yet associated with MS 122) and begins to buffer other messages intended for AP 122. Thereafter, MS 122 and AP 110 release buffered messages to each other and perform a dissociation, as before.

In another alternate embodiment, the bridge filter tables of the wireless network may be updated using, for example, the AUTHENTICATION RESPONSE message. After AP 111 has received an AUTHENTICATION REQUEST message from MS 122, AP 111 is aware that a handover of MS 122 to AP 111 is imminent. AP 111 may therefore send the AUTHENTICATION RESPONSE message back to MS 122 using the address of MS 122 as the source of the message. This will trigger an updating of the bridge filter tables as before.

In still other embodiments, the embedded learning function of the bridges and access points may be triggered to update the contents of the filter tables by special purpose messages whose function is chiefly, or solely, to switch message buffering to future access points in anticipation of a handover.

Although the present invention has been described in detail, those skilled in the art should understand that they can make various changes, substitutions and alterations herein without departing from the spirit and scope of the invention in its broadest form.

## Claims

1. A method of operating a wireless computer network to achieve handover of a mobile station from a first access point to a second access point, said method comprising the steps of:
receiving a first message from said mobile station into a wireless transceiver circuit, said first message indicating that said mobile station will soon dissociate from said first access point and associate with said second access point;
transmitting a second message, including an identifier relating to said mobile station, across a wired backbone portion of said wireless computer network, said second message causing said wireless computer network to route future messages destined for said mobile station to said second access point and causing said second access point to begin to receive and buffer messages destined for said mobile station; and
subsequently dissociating said mobile station from said first access point, said mobile station associating with said second access point to achieve said handover.

2. The method as recited in Claim 1 further comprising the step of transmitting buffered messages to said mobile station following transmission of said first message.

3. The method as recited in Claim 1 wherein said step of transmitting said second message comprises the step of transmitting said second message from said said second access point to said first access point.

4. The method as recited in Claim 3 wherein said wireless computer network comprises at least one bridge containing a bridge filter table, said step of transmitting causing said bridge to update an entry in said bridge filter table corresponding to said identifier.

5. The system as recited in Claim 4 wherein said identifier indicates that said mobile station is a source of said second message.

6. The method as recited in Claim 1 wherein said step of transmitting said second message comprises the step of transmitting said second message from said said first access point to said second access point.

7. The method as recited in Claim 6 wherein said wireless computer network comprises at least one bridge containing a bridge filter table, said step of transmitting causing said bridge to update an entry in said bridge filter table corresponding to said identifier.

8. The system as recited in Claim 7 wherein said identifier indicates that said mobile station is a destination of said second message.

9. The method as recited in Claim 1 further comprising the step of receiving messages from said mobile station destined for said wireless computer network after said network interface transmits said second message.

10. The method as recited in Claim 1 further comprising the step of transmitting a dissociate message to said mobile station to cause said mobile station to dissociate from said first access point.

11. A wireless computer network, comprising:
a wire-based local area network ("LAN") having a server and a backbone;
a plurality of bridges coupled to said backbone;
a plurality of access points that allow messages to be communicated among said LAN and a plurality of roamable wireless mobile stations; and
a system, associated with each of said plurality of access points, for achieving handover of a mobile station from a current access point of said mobile station to a subsequent access point of said mobile station, said system comprising:
a wireless transceiver circuit that receives a first message from said mobile station indicating that said mobile station will sooon dissociate from said current access point and associate with said subsequent access point; and
a network interface that transmits a second message, including an identifier relating to said mobile station, across said backbone of said LAN that causes said subsequent access point to begin to receive and buffer messages destined for said mobile station, said mobile station subsequently dissociating from said current access point and associating with said subsequent access point to achieve said handover.

12. The network as recited in Claim 11 wherein said transceiver transmits buffered messages to said mobile station following transmission of said first message.

13. The network as recited in Claim 11 wherein said subsequent access point initiates said process by transmitting said second message to said current access point via said LAN, said second message causing said plurality of bridges to redirect messages destined for said mobile station from said current access point to said subsequent access point.

14. The network as recited in Claim 11 wherein each of said plurality of bridges comprises a bridge filter table, said second message causing said each of said plurality of bridges to update an entry in said bridge filter table corresponding to said identifier.

15. The network as recited in Claim 11 wherein said transceiver circuit receives messages from said mobile station destined for said LAN after said network interface transmits said first message.

16. The network as recited in Claim 11 wherein said transceiver transmits a dissociate message to said mobile station to cause said mobile station to dissociate from said current access point.

17. The network as recited in Claim 11 wherein said subsequent access point transmits said received and buffered messages to said mobile station after said mobile station associates with said subsequent access point.
